# EUROPÄISCHE PATENTSCHRIFT

(11) **EP 2 599 650 B1**
(45) Veröffentlichungstag und Bekanntmachung des Hinweises auf die Patenterteilung: **16.07.2014**
(21) Anmeldenummer: 12186055.5
(22) Anmeldetag: 26.09.2012
(51) Int. Cl.: B60G 7/00, B23K 20/06, B62D 21/09, B62D 29/00

(54) **Kraftfahrzeug-Fahrwerkskomponente**
Motor vehicle undercarriage component
Composants de châssis de véhicule automobile

(30) Priorität: 02.12.2011 DE 102011055993
(43) Veröffentlichungstag der Anmeldung: 05.06.2013
(73) Patentinhaber: Benteler Automobiltechnik GmbH, 33102 Paderborn (DE)
(72) Erfinder: Neumann, Dr. Hans-Jürgen, 33699 Bielefeld (DE); Meyer, Stephan, 33605 Bielefeld (DE); Linnig, Wolfram, 33100 Paderborn (DE)
(74) Vertreter: Griepenstroh, Jörg

(56) Entgegenhaltungen:
- EP-A1- 0 713 791
- EP-A1- 1 642 754
- EP-A1- 1 935 551
- EP-A2- 1 690 780
- WO-A1-2012/084117
- DE-A1- 19 643 001
- DE-A1- 19 649 076
- DE-A1-102009 012 551
- DE-A1-102009 019 320
- US-A- 6 104 012
- US-A1- 2005 109 769
- US-A1- 2008 191 443
- US-B1- 6 234 375

## Beschreibung

Die Erfindung betrifft eine Fahrwerkskomponente für ein Kraftfahrzeug gemäß den Merkmalen im Oberbegriff von Anspruch 1.

Konstruktive, technologische und werkstoffliche Leichtbaulösungen zur Gewichtsreduzierung von Kraftfahrzeug-Fahrwerkskomponenten gewinnen zur Kraftstoff- und Emissionsreduzierung zunehmend an Bedeutung. Eine besondere Rolle kommt dabei Leichtbauwerkstoffen wie Aluminium zu, um insbesondere die sogenannten ungefederten Massen im Fahrwerksbereich zu reduzieren. Dieser Trend wird noch dadurch beschleunigt, dass abgasarme bzw. abgasfreie Fahrzeuge mit Hybrid- bzw. Elektroantrieb für die erforderlichen Elektrokomponenten ein deutliches Mehrgewicht erfordern, welches durch Gewichtsreduzierungen bei anderen Komponenten kompensiert werden muss. Um bei möglichst geringer Eigenmasse die erforderlichen hohen Festigkeits- und Steifigkeitseigenschaften bei hochbeanspruchten Fahrwerkskomponenten wie Schwenklager, Feder-, Führungs-, Dreieckslenker usw. zu gewährleisten, erlangen aus Aluminium geschmiedete Fahrwerkskomponenten mit Streckgrenzen Rp0,2 über 300 MPa und Bruchdehnungen A5 über 10 % zunehmende Marktnachfrage. Daneben erlangen auch aus Leichtmetall-Strangpressprofilen, insbesondere Aluminium-Strangpressprofilen hergestellte Fahrwerkskomponenten, z. B. Federlenker, wegen ihres Leichtbaupotentials dank der gegenüber Schmiedeteilen nicht massiven Querschnittsgestaltung wachsende Bedeutung.

Neben der Streckgrenze als Auslegungskriterium werden Fahrwerkskomponenten auch auf Steifigkeit ausgelegt, um definierte Knicklasten in besonderen Last- und Crashfällen zu ertragen. Maßgeblich für die Steifigkeit ist neben der Querschnittsgestaltung das E-Modul des eingesetzten Werkstoffs. Dieses ist bei Aluminium mit ca. 70.000 kN/mm² dreimal kleiner als bei Stahl. Dadurch tritt an steifigkeitskritischen Bauteilbereichen die unerwünschte Situation ein, dass die bei Schmiedeteilen üblichen massiven Querschnitte erhöht werden müssen, um die geforderte Steifigkeiten zu erreichen, was zu zusätzlicher Masse und damit erhöhtem Gewicht führt.

Angesichts zunehmend kompakter Fahrzeugbauweise auch im Bereich des Fahrwerks ist es inzwischen der Regelfall, dass aufgrund von Bauraumrestriktionen die Bauteilquerschnitte nicht beliebig erhöht werden können, um die erforderlichen Werte für die steifigkeitsrelevanten Widerstandsmomente der Bauteilquerschnitte, z. B. durch leichtbaugerechte offene oder geschlossene Profile größerer Durchmesser zu erreichen.

Da das steifigkeitsrelevante E-Modul bei Leichtmetallwerkstoffen wie Aluminium und auch bei anderen Werkstoffen nur in sehr engen Grenzen zu beeinflussen ist, beinhalten andere bekannte Lösungen den Verbund mit Werkstoffen, die über ein höheres E-Modul verfügen. So ist beispielsweise bekannt, auf steifigkeitsrelevante Bereiche von Aluminium-Schmiedeteilen Stahlauflagen verschiedener geometrischer Formen und Dicke aufzuschmieden, deren E-Modul ca. 210.000 kN/mm² beträgt. Problematisch hier sind allerdings die galvanischen Korrosionsanfälligkeiten zwischen den galvanisch relevanten Berührungsbereichen von Aluminiumgrundmaterial und der Stahlauflage sowie der Korrosion der Stahloberfläche selbst. Dies gilt insbesondere unter dem Aspekt, dass solche Aluminium-Schmiedeteile aus Kostengründen nicht mit einer zusätzlichen Korrosionsschicht versehen werden.

Bekannt sind auch zahlreiche Anwendungen verschiedener Typen von Verbundwerkstoffen, z. B. Schichten-, Teilchen- oder Faserverbundwerkstoffe usw. in unterschiedlichsten Anwendungsbereichen. Hierbei werden unterschiedliche Werkstoffe geschichtet. Diese Technologien kommen für die vorliegenden kompakten und hochbelasteten Bauteile aus Kostengründen nur in Ausnahmefällen in Betracht. Ein weiterer bekannter Ansatz besteht in der Verwendung von Metall-Matrix-Verbundwerkstoffen (englisch: metal matrix composites MMC), bei denen erhöhte E-Module durch Einlagerung von keramischen Fasern in die Aluminium-Matrix erzielt werden. Diese Technologie ist jedoch aufgrund der hohen Fertigungskosten für die MMC's auf Sonderfälle bzw. - einsätze beschränkt. Insbesondere aus dem Motorsport sind auch CFK-Komplettlösungen bekannt, die jedoch ebenfalls aufgrund der hohen Kosten sowie des relativ spröden und verformungsarmen Bruchverhaltens nicht für eine Anwendung im konventionellen Automobilbereich eingesetzt werden.

Wie bereits erwähnt, gewinnen neben geschmiedeten Fahrwerkskomponenten solche aus Leichtmetall-Strangpressprofilen zunehmende Bedeutung. Für Kraftfahrzeug-Fahrwerkskomponenten, wie Federlenker aus Strangpressprofilen mit geschlossenen oder offenen Querschnitten, treffen jedoch ähnliche bzw. analoge Nachteile wie vorstehend beschrieben zu. Aus Strangpressprofilen gefertigte Fahrwerkskomponenten müssen in ihren Querschnitten über ihre gesamte Länge auf den jeweils steifigkeitskritischen Abschnitt ausgelegt werden, obwohl dieser in der Regel nur einen geringen Anteil an der Gesamtlänge des Bauteils hat. Fertigungstechnisch bedingt weisen die Strangpressprofile daher über ihre gesamte Profillänge eine auf die erwartete Maximalbelastung ausgelegte Querschnittsgeometrie auf. Üblicherweise wird überschüssiges Material, welches also nicht zum Steifigkeits- und Festigkeitsverhalten der Fahrwerkskomponente beiträgt, mechanisch abgetragen, um das Gewicht der Bauteile reduzieren zu können. Dies erfordert allerdings zusätzliche kostenintensive Maßnahmen, sowohl für die Bearbeitung der Fahrwerkskomponenten als auch für die Wiedergewinnung bzw. Verwertung des hierbei entstehenden Leichtmetallschrotts.

Da innerhalb einer Fahrzeug-Modellreihe in der Regel je nach Motorisierung und anderen Ausstattungsmerkmalen jeweils für unterschiedliche Lastgruppen gewichtsoptimierte Fahrwerkskomponenten eingesetzt werden, müssen im Falle des Einsatzes von Strangpressprofilen aus Leichtmetall unterschiedliche Profilquerschnitte verwendet werden. Dadurch entstehen für einzelne Lastgruppenmodifikationen jeweils eigenständige Bauteilausführungen, die erhebliche Mehrkosten für unterschiedliche Strangpress- und Bearbeitungswerkzeuge sowie entsprechende logistische Mehraufwendungen verursachen.

Das Auftragen von zusätzlichen partiellen Versteifungsmaterialien mittels Schmelz- oder Punktschweißen bei Fahrwerkskomponenten aus Leichtmetall scheidet wegen der negativen Wärmeeinflüsse auf die Festigkeit sowie der Unverschweißbarkeit von Leichtmetall- und Stahlwerkstoffen aus, insbesondere wenn die Verstärkung in dynamisch und korrosiv belasteten Bereichen notwendig ist.

Die Magnetumformung bzw. das elektromagnetische Pulsschweißen mit dem auch verschiedenartige metallische Werkstoffe gefügt werden können, ist im Stand der Technik allgemein bekannt und wird auch in der automatisierten Fertigung im Automobilbau eingesetzt.

Die DE 100 45 230 A1 beschreibt ein Herstellverfahren für einen Fahrzeug-Hilfsrahmen, insbesondere einen Achsträger oder einen damit verbundenen Lenker oder dergleichen, der aus verschiedenen Komponenten zusammengesetzt wird, welche durch Magnetimpulsschweißen derart durch elektromagnetisches Umformen miteinander verbunden werden, dass eine metallurgische Verbindung zwischen diesen Komponenten entsteht. Zumindest eine der miteinander zu verbindenden Komponenten kann aus einer Aluminiumlegierung oder einem anderen Leichtmetall bestehen.

Durch die DE 10 2009 019 320 A1 zählt eine Verbundlenkerhinterachse für ein Kraftfahrzeug zum Stand der Technik mit zwei starren Längslenkern zur Aufnahme von Radträgern, die durch ein Querprofil biegestarr aber torsionselastisch miteinander verbunden sind. Das Querprofil ist durch elektromagnetisches Pulsschweißen an den Längsträgern befestigt.

Die DE 199 22 800 A1 offenbart einen Hilfsrahmen für ein Kraftfahrzeug sowie ein Verfahren zur Herstellung eines Hilfsrahmens. Der Hilfsrahmen, beispielsweise ein Hinterachsträger für ein Kraftfahrzeug, besteht aus Quer- und Längsträgern, die über Knotenelemente aus einem Leichtmetall-Gusswerkstoff miteinander verbunden sind. Die Knotenelemente besitzen Aufnahmen für Radlenker sowie Aufnahmen für Lagerelemente zur Anbindung des Hilfsrahmens an den Fahrzeugaufbau. Die Verbindung der Knotenelemente mit den Trägern erfolgt durch Verschweißung oder in besonders vorteilhafter Weise durch Formschluss mittels Magnetumformen

Aus der EP 1 690 780 ist eine Dachanordnung für ein Kraftfahrzeug bekannt, die eine Verstärkungsstruktur umfasst. Die Dachanordnung besteht aus der Verstärkungsstruktur und einer Außenhaut. Die Verstärkungsstruktur weist zumindest eine Schrägverstärkung auf. Durch diese Dachanordnung kann die Karosseriesteifigkeit erhöht werden. Zumindest Teile der Dachanordnung können aus Blechen, beispielsweise gebogenen oder tiefgezogenen Blechen, Strangpressprofilen, Gussteilen und/oder Pressteilen hergestellt sein. Als Material für die Dachanordnung kann beispielsweise Aluminium, Aluminiumlegierung, Stahl, Magnesium, Kunststoff und/oder ein Verbund aus diesen Materialien verwendet werden.

Aus der EP 1 935 551 A1 ebenso wie der US 6,234,375 sowie der US 6,104,012 gehen Verfahren und Vorrichtungen zur Herstellung von Schweißbaugruppen, beispielsweise Kraftfahrzeugrahmenkomponenten bzw. Fahrzeugrahmenanordnungen hervor unter Nutzung der Magnetimpulsschweißtechnologie.

Die DE 196 49 076 A1 beschreibt ein Verfahren zur Herstellung einer Verbundlenkerachse für Kraftfahrzeuge und eine solche Verbundlenkerachse. Die Verbundlenkerachse weist zwei rohrförmige Längslenker auf, die mit einem Querprofil verbunden sind. An jedem Längslenker wird mittels hydraulischem Innenhochdruck ein an die Querschnittskonfiguration des Endes eines Querprofils angepasster Anbindungsbereich erzeugt. Am Anbindungsbereich wird das Ende montagegerecht positioniert und schweißtechnisch festgelegt.

Durch die US 2008/0191443 A1 zählt eine Verbundlenkerachse mit einem integrierten Torsionsprofil zum Stand der Technik. Das Torsionsprofil wird rollgeformt und U-förmig konfiguriert. Außen am die beiden Schenkel verbindenden Steg des U-Profils ist ein Versteifungselement aufgeschweißt.

Die US 2005/0109769 A1 beschreibt eine Falzmaschine zum Verbinden eines inneren Blechs mit einem äußeren Blech unter Nutzung einer elektromagnetischen Spule und der Magnetimpulsschweißtechnik.

Aus der DE 10 2009 012 551 A1 geht ein Federlenker für eine Kraftfahrzeug-Radaufhängung hervor. Der Federlenker umfasst eine Federlenkerschale mit einem erweiterten Abschnitt zur Abstützung einer Fahrzeugfeder. Es ist ein Schließblech vorgesehen, dass an dem erweiterten Abschnitt der Federlenkerschale angeordnet ist und dieses aussteift. Die Federlenkerschale und das Schließblech sollen insbesondere miteinander verklebt sein.

Der Erfindung liegt ausgehend vom Stand der Technik die Aufgabe zugrunde, eine belastungstechnisch effiziente und leichtbauende Fahrwerkskomponente zu schaffen.

Die Lösung dieser Aufgabe besteht nach der Erfindung in einer Fahrwerkskomponente, insbesondere einem Federlenker, gemäß den Merkmalen von Anspruch 1.

Vorteilhafte Ausgestaltungen und Weiterbildungen des grundsätzlichen Erfindungsgedankens sind Gegenstand der abhängigen Ansprüche 2 bis 10.

Erfindungsgemäß kommt als Basisprofil ein offenes Strangpressprofil aus Leichtmetall zum Einsatz. Dieses besitzt zwei mit Abstand zueinander angeordnete Wände. Zumindest in einem Bereich des Basisprofils verbindet das Verstärkungsprofil aus Stahl die freien Enden der Wände, wobei das Verstärkungsprofil und das Basisprofil mittels elektromagnetischem Pulsschweißen gefügt sind.

Vorzugsweise ist das Verstärkungsprofil ein Stahlblech, welches die freien Enden der Wände in einem steifigkeits- und/oder festigkeitsrelevanten Abschnitt des Basisprofils verbindet. Ein solcher steifigkeits- und festigkeitsrelevanter Abschnitt ist beispielsweise bei einem Federlenker der Bereich der Federauflage. Das offene Basisprofil wird in den festigkeits- und/oder steifigkeitskritischen Bereichen bzw. Abschnitten partiell durch das Versteifungsprofil aus höherfestem und höhersteifem Werkstoff geschlossen.

Die Fügung zwischen stranggepresstem Basisprofil und Verstärkungsprofil aus Stahl ist dauerfest. Es entsteht eine stoffschlüssige Verbindung. Die Schweißmethode bringt keine Wärme in die Bauteile ein und es tritt keine Gefügebeeinflussung durch Wärme auf. Es ist daher möglich, metallische Werkstoffe mit stark unterschiedlichen Schmelzpunkten zu verschweißen. Die Erfindung macht sich die Erkenntnis zu eigen, dass mit der elektromagnetischen Puls Technologie (EMPT) bei Fahrwerkskomponenten stoffschlüssige Verbindungen zwischen Leichtmetalllegierungen, insbesondere Aluminiumlegierungen und hoch- bzw. höchstfesten Stählen ohne negative Einflüsse auf die Werkstofffestigkeit hergestellt werden können.

Beim elektromagnetischen Pulsschweißen beschleunigt ein gepulstes elektromagnetisches Feld eines der beiden Bauteilkomponenten, vorzugsweise das Verstärkungsprofil im Fügebereich. Hierbei wird das Verstärkungsprofil im Fügebereich über eine Distanz von 0,3 mm bis 2,0 mm auf Geschwindigkeiten über 200 m/s beschleunigt. Beim Aufprall des Verstärkungsblechs auf die Enden des Basisprofils werden im Aufschlagbereich die auf beiden Oberflächen haftenden Oxidschichten gelöst und ausgeblasen. Die so erzeugten reinen Oberflächen sind hochreaktiv und stehen unter extremem Kontaktdruck. Dies bewirkt die Bildung einer metallischen Bindung durch Elektronenaustausch. Vorteilhaft ist auch, dass die Fügekräfte sehr genau einstellbar sind. Dies ermöglicht eine bauteilgerechte Anpassung des Fügeprozesses an die jeweiligen werkstoffmäßigen und/oder geometrischen Bauteilparameter.

Eine für die Praxis besonders vorteilhafte Ausführungsform sieht vor, dass in den Enden eine Vertiefung ausgebildet ist, die dafür vorgesehen ist, beim Pulsschweißen verformtes Material der Enden aufzunehmen. Diese Vertiefung bildet einen Freiraum in den Material der Enden beim Fügeprozess beschleunigt wird. Hierdurch wird die Qualität der Fügung verbessert. Die Vertiefung kann über die gesamte Länge der Enden oder auch nur im Fügebereich vorgesehen sein. Hierbei kann die Vertiefung beim Strangpressen bereits ausgeformt werden. Möglich ist es selbstverständlich auch, die Vertiefungen in den Enden auf der benötigten Auflagelänge im zu verstärkenden Abschnitt durch mechanische Bearbeitung, beispielsweise durch Fräsen, zu erzeugen.

Die Vertiefung in den Enden der Wände kann auch dafür vorgesehen sein verformtes Material des Verstärkungsprofils aufzunehmen, welches beim Pulsschweißen in dem durch die Vertiefung gebildeten Freiraum beschleunigt wird und sich in die Vertiefung einformt.

Für die Praxis vorteilhaft ist die Vertiefung zwischen 0,5 mm und 2,0 mm, vorzugsweise 1,2 mm bis 1,7 mm, insbesondere ca. 1,5 mm tief. Weiterhin weist die Vertiefung zwei zueinander geneigte Seitenflächen auf. Der Winkel zwischen den Seitenflächen ist zweckmäßigerweise zwischen 120° und 160°, vorzugsweise circa 150° bemessen. Auch diese Maßnahme trägt zu einer hochqualitativen Fügeverbindung zwischen Basisprofil und Verstärkungsprofil bei.

Die stranggepressten Basisprofile sind einseitig offen gestaltet und haben in vorteilhafter Ausgestaltung einen hutartigen Querschnitt mit zwei seitlichen Wänden, die durch einen Boden oder Steg miteinander verbunden sind. Die freien Enden sind vorzugsweise als von den Wänden seitlich abstehende Flanschabschnitte ausgebildet. Bei einem für die Praxis geplanten Federlenker weisen die Flanschabschnitte eine Breite von ca. 16 mm auf.

Zur Sicherung der Korrosionsbeständigkeit können mit einer Beschichtung versehene Verstärkungsprofile zum Einsatz gelangen. Hierbei können verzinkte, aluminierte oder auf eine andere Art und Weise mit einer Beschichtung versehene Verstärkungsprofile Verwendung finden. Auch in diesem Zusammenhang erweist sich die elektromagnetische Pulstechnologie als Fügeverfahren zwischen Basisprofil und beschichtetem Verstärkungsprofil als vorteilhaft.

Je nach Festigkeits- und Steifigkeitsanforderungen kann auch ein gefalztes Verstärkungsblech auf die Enden aufgeschoben werden. Hierzu weist das Verstärkungsprofil seitliche Bördelfalze auf, welche die Enden bzw. die Flanschabschnitte an den Enden umgreifen. Neben der stoffschlüssigen Pulsschweißverbindung wird so eine zusätzliche formschlüssige Verbindung erzeugt. Solche Lösungen können Varianten für verschiedene Lastgruppen der Fahrwerkskomponenten auf Basis des gleichen stranggepressten Basisprofils bilden.

Für einen zusätzlichen Korrosions- bzw. Kantenschutz und auch einer Erhöhung der Fügefestigkeit kann im Fügebereich von Basisprofil und Verstärkungsprofil ein Haft- und/oder Dichtmaterial eingebracht sein. So können abdichtende und/oder klebende Materialien jeweils neben dem Pulsschweißfügebereich aufgetragen sein.

Wie bereits erwähnt, kann durch vollständiges oder teilweises Einfalzen der Ränder des Verstärkungsprofils weitere Korrosions- und Formschlusseffekte erzielt werden.

Bei der erfindungsgemäßen Fahrwerkskomponente werden Basisprofile in Form von offenen Strangpressprofilen aus weniger steifen und weniger festen aber leichteren Leichtmetallwerkstoffen mit hochsteifen und hochfesten lokalen Verstärkungsprofilen aus Stahlwerkstoff kombiniert. Die Fügung der beiden Bauteilkomponenten erfolgt erfindungsgemäß mittels des elektromagnetischen Pulsschweißens. Die Festigkeit und die Steifigkeit der Fahrwerkskomponenten können gezielt nach belastungsrelevanten lokalen Anforderungen eingestellt bzw. variiert werden. Es ist auch möglich, ein gewichtsoptimiertes Basisprofil für verschiedene Lastgruppen zu konzipieren, indem verschiedene geometrisch und/oder werkstoffmäßig variierende bzw. abgestimmte Verstärkungsprofile mit dem Basisprofil kombiniert werden. In diesem Zusammenhang erweist sich die erfindungsgemäß vorgesehene Fügung mittels elektromagnetischem Pulsschweißen als besonders vorteilhaft. Die erfindungsgemäß vorgeschlagene Lösung schafft somit last- und querschnittsvariable Fahrwerkskomponenten, insbesondere Federlenker in Leichtbauweise mit signifikanten Potentialen zur Reduzierung der Bauteilgewichte und Herstellungskosten. Es können modulartig verschiedene Basisprofile und Verstärkungsprofile je nach Steifigkeits- und Festigkeitsansprüchen variabel verbunden werden. Da das elektromagnetische Pulsschweißverfahren (EMPT) mit Prozesszeiten von 20µs und optimierungsfähigen Taktzeiten von ca. 5 Sekunden äußerst produktiv ist und sich analog einer Laserschweißanlage in Fertigungslinien integrieren lässt, sind auch hinsichtlich der Fertigungszeiten und der Fertigungskosten weitere Vorteile zu erwarten.

Die Erfindung ist nachfolgend anhand von in den Zeichnungen dargestellten Ausführungsbeispielen näher beschrieben. Es zeigen:
- Figur 1: eine erfindungsgemäße Fahrwerkskomponente in Form eines Federlenkers in einer perspektivischen Ansicht;
- Figur 2: einen Federlenker gemäß der Figur 1 in einer Ansicht von unten;
- Figur 3a: einen Ausschnitt aus dem Federlenker gemäß der Figur 1 mit einer schematischen Darstellung des Fügebereichs zwischen Basisprofil und Verstärkungsprofil vor dem Fügen;
- Figur 3b: die Darstellung entsprechend der Figur 3a nach dem Fügen;
- Figur 4: in perspektivischer Darstellungsweise einen Ausschnitt aus einer weiteren Ausführungsform eines Federlenkers und
- Figur 5: in perspektivischer Darstellungsweise einen Ausschnitt aus einer weiteren Ausführungsform eines Federlenkers.

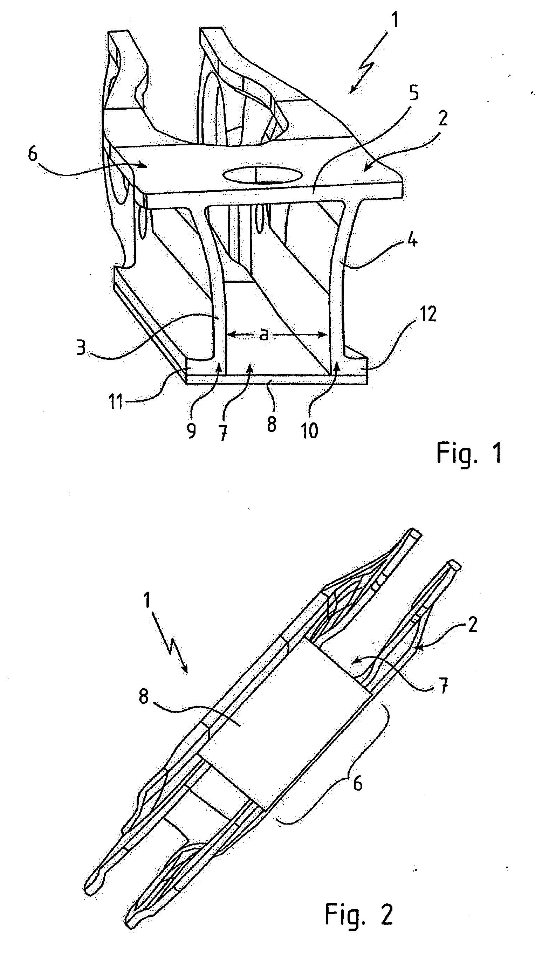

Die Figuren 1 und 2 zeigen eine erfindungsgemäße Fahrwerkskomponente 1 für ein Kraftfahrzeug in Form eines Federlenkers.

Die Fahrwerkskomponente 1 weist ein stranggepresstes Basisprofil 2 aus Aluminium bzw. einer Aluminiumlegierung auf. Das Basisprofil 2 besitzt ein im Querschnitt hutförmiges Profil mit zwei mit Abstand a zueinander angeordneten Wänden 3, 4, die durch einen Steg 5 miteinander verbunden sind. Ein steifigkeits- und festigkeitsrelevanter Bereich 6 des Basisprofils 2 ist die Federauflage. In diesem Bereich ist auf der dem Steg 5 gegenüberliegenden offenen Seite 7 des Basisprofils 2 ein Verstärkungsprofil 8 aus Stahl vorgesehen. Das Verstärkungsprofil 8 erstreckt sich zwischen den freien Enden 9, 10 der Wände 3, 4 und ist mit diesen gefügt. Die Fügung zwischen dem Verstärkungsprofil 8 und den freien Enden 9, 10 des Basisprofils 2 ist durch elektromagnetisches Pulsschweißen ausgeführt. Hierdurch wird eine stoffschlüssige Verbindung zwischen den aus verschiedenen metallischen Werkstoffen bestehenden Basisprofil 2 und dem Verstärkungsprofil 8 ohne Gefügeänderungen durch Temperatureinfluss erzeugt.

Der Federlenker 1 besteht aus einem gewichtsoptimiertem, einseitig offenen, stranggepresstem Basisprofil 2 aus Leichtmetall, welches gezielt zur Erhöhung des statischen und dynamischen Belastungsverhaltens im Bereich 6 der Federlauflage durch das Verstärkungsprofil 8 verstärkt ist.

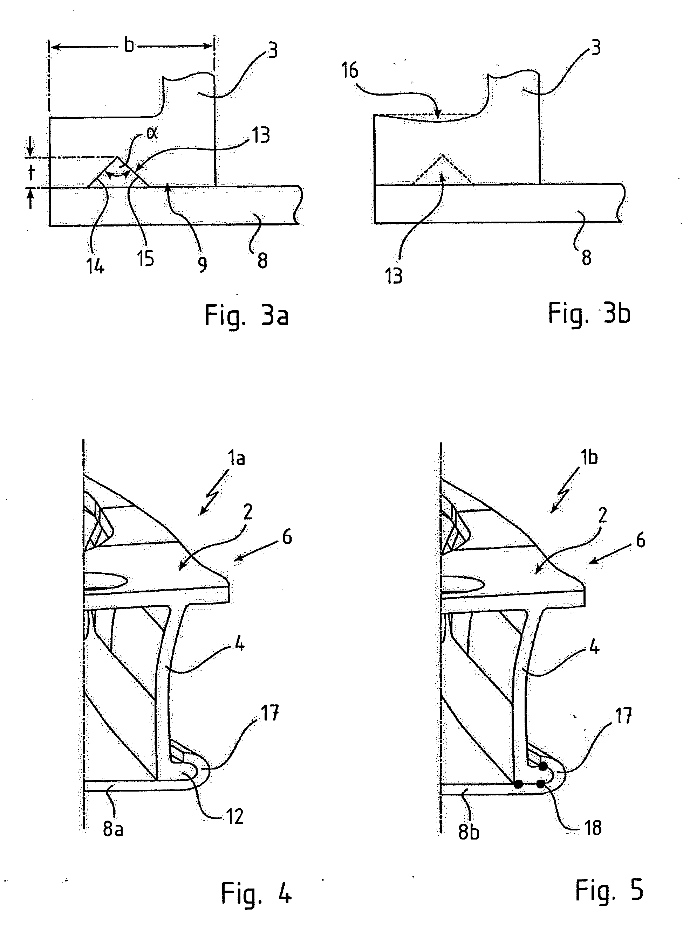

Die freien Enden 9, 10 sind als von den Wänden 3, 4 seitlich abstehende Flanschabschnitte 11, 12 ausgebildet. Wie in der Figur 3a zu erkennen, ist in den Enden 9, 10 bzw. den sich parallel zum Verstärkungsprofil 8 erstreckenden Flanschabschnitten 11, 12 jeweils eine Vertiefung 13 ausgebildet. Die Vertiefung 13 ist dazu vorgesehen das Material der Enden 9, 10 beim Pulsschweißen beschleunigt werden kann und sich in die Vertiefung 13 verformt. Die Flanschabschnitte 11, 12 weisen eine Breite b auf, die auf die Anforderungen der magnetumformtechnischen Fügung mit dem Verstärkungsprofil 8 abgestimmt ist.

Die Figuren 3a und 3b zeigen schematisch einen Ausschnitt aus dem Fügebereich zwischen dem freien Ende 9 der Wand 3 des Basisprofils 2 und dem Verstärkungsprofil 8. Figur 3a zeigt den Fügebereich vor dem Fügen. Die Vertiefung 13 hat eine Tiefe t zwischen 0,5 mm und 2,0 mm, vorzugsweise von 1,2 mm bis 1,7 mm, insbesondere ca. 1,5 mm. Des Weiteren weist die Vertiefung 13 zwei zueinander geneigte Seitenflächen 14, 15 auf. Die Seitenflächen 14, 15 schließen einen Winkel α ein, der zwischen 120° und 160°, vorzugsweise ca. 150° bemessen ist. Die Figur 3b zeigt den Fügebereich schematisch nach der Verformung. Die Vertiefung 13 ist durch das beim elektromagnetischen Pulsschweißen beschleunigte und verformte Material der Enden 9, 10 ausgefüllt. Das Material hat sich in die Vertiefung 13 hinein verformt. Auf der gegenüberliegenden Seite des Endes 9 bzw. des Flanschabschnittes 11 hat sich hierdurch eine Eindellung 16 gebildet.

Zur Sicherung der Korrosionsbeständigkeit kann das Verstärkungsprofil 8 mit einer Beschichtung versehen sein. Es können beispielsweise verzinkte, aluminierte oder auf eine andere Art beschichtete und korrosionsgeschützte Verstärkungsprofile 8 Anwendung finden.

Die in den Figuren 4 und 5 dargestellten Fahrwerkskomponenten 1 a bzw. 1 b entsprechen vom grundsätzlichen Aufbau der Fahrwerkskomponente 1, wie anhand der Figuren 1 bis 3 beschrieben. Einander entsprechende Bauteile bzw. Bauteilkomponenten sind mit den gleichen Bezugszeichen versehen. Auf eine nochmalige Beschreibung wird verzichtet.

Bei der in der Figur 4 dargestellten Fahrwerkskomponente 1 a und in der Figur 5 dargestellten Fahrwerkskomponente 1b weist das Verstärkungsprofil 8a bzw. 8b seitliche Bördelfalze 17 auf, welche die Enden 9, 10 mit ihren seitlich abstehenden Flanschabschnitten 11, 12 umgreifen. Wie zuvor beschrieben, sind die freien Enden 9, 10 und das Verstärkungsblech 8a, 8b mittels elektromagnetischem Pulsschweißen gefügt. Zusätzlich ergibt sich eine formschlüssige Verbindung durch die umgreifenden Bördelfalze 17. Zur Montage wird das mit den Bördelfalzen 17 versehene Verstärkungsprofil 8a, 8b auf die freien Enden 9, 10 bzw. die Flanschabschnitte 11, 12 aufgeschoben. Grundsätzlich kann das Verstärkungsblech 8a, 8b auch umgebördelt werden, wenn es am Basisprofil 2 anliegt. Die Bördefalze 17 können auch nach dem elektromagnetischen Pulsschweißprozess umgelegt werden.

Bei der Fahrwerkskomponente 1 b gemäß der Figur 5 sind zusätzlich im Fügebereich von Basisprofil 1 und Verstärkungsprofil 8b ein Haft- und/oder Dichtmaterial 18 eingebracht, beispielsweise in Form eines Klebstoffs. Dies gewährleistet einen zusätzlichen Korrosionsschutz sowie Kantenschutz. Darüber hinaus kann auf diese Weise eine zusätzliche stoffschlüssige Verbindung erzeugt werden.

### Bezugszeichen:

- 1 -: Fahrwerkskomponente
- 1a -: Fahrwerkskomponente
- 1b -: Fahrwerkskomponente
- 2 -: Basisprofil
- 3 -: Wand
- 4 -: Wand
- 5 -: Steg
- 6 -: Bereich von 2
- 7 -: offene Seite von 2
- 8 -: Verstärkungsprofil
- 9 -: freies Ende von 3
- 10 -: freies Ende von 4
- 11 -: Flanschabschnitt
- 12 -: Flanschabschnitt
- 13 -: Vertiefung
- 14 -: Seitenfläche von 13
- 15 -: Seitenfläche von 13
- 16 -: Eindellung
- 17 -: Bördelfalz
- 18 -: Haft- bzw. Dichtmaterial

- a -: Abstand zwischen 3 und 4
- b -: Breite von 11, 12
- t -: Tiefe von 13
- α -: Winkel

## Patentansprüche

1. Fahrwerkskomponente für ein Kraftfahrzeug, welche ein stranggepresstes Basisprofil (2) aus Leichtmetall aufweist und durch ein Verstärkungsprofil (8, 8a, 8b) aus Stahl verstärkt ist, **dadurch gekennzeichnet, dass** das Basisprofil (2) zwei mit Abstand (a) zueinander angeordnete Wände (3, 4) besitzt und das Verstärkungsprofil (8, 8a, 8b) die freien Enden (9, 10) der Wände (3, 4) zumindest in einem Bereich (6) des Basisprofils (2) verbindet, wobei das Verstärkungsprofil (8, 8a, 8b) und das Basisprofil (2) mittels elektromagnetischem Pulsschweißen gefügt sind.

2. Fahrwerkskomponente nach Anspruch 1, **dadurch gekennzeichnet, dass** in den Enden (9, 10) eine Vertiefung (13) ausgebildet ist, die dafür vorgesehen ist, beim Pulsschweißen verformtes Material der Enden (9, 10) aufzunehmen.

3. Fahrwerkskomponente nach Anspruch 2, **dadurch gekennzeichnet, dass** die Vertiefung (13) zwischen 0,5 mm und 2,0 mm tief ist.

4. Fahrwerkskomponente nach Anspruch 2 oder 3, **dadurch gekennzeichnet, dass** die Vertiefung (13) zwei zueinander geneigte Seitenflächen (14, 15) aufweist, wobei der Winkel (α) zwischen den Seitenflächen (14, 15) zwischen 120° und 160° bemessen ist.

5. Fahrwerkskomponente nach einem der Ansprüche 1 bis 4, **dadurch gekennzeichnet, dass** die Enden (9, 10) als von den Wänden (3, 4) seitlich abstehende Flanschabschnitte (11, 12) ausgebildet sind.

6. Fahrwerkskomponente nach einem der Ansprüche 1 bis 5, **dadurch gekennzeichnet, dass** das Verstärkungsprofil (8a,8b) seitliche Bördelfalze (17) besitzt, welche die Enden (9, 10) umgreifen.

7. Fahrwerkskomponente nach einem der Ansprüche 1 bis 6, **dadurch gekennzeichnet, dass** im Fügebereich von Basisprofil (2) und Verstärkungsprofil (8b) ein Haft- und/oder Dichtmaterial (18) eingebracht ist.

8. Fahrwerkskomponente nach einem der Ansprüche 1 bis 7, **dadurch gekenntzeichnet, dass** das Verstärkungsprofil (8, 8a, 8b) in einem steifigkeits- und/oder festigkeitsrelevanten Bereich (6) des Basisprofils (2) angeordnet ist.

9. Fahrwerkskomponente nach einem der Ansprüche 1 bis 8, **dadurch gekennzeichnet, dass** das Verstärkungsprofil (8, 8a, 8b) eine Beschichtung ausweist.

10. Fahrwerkskomponente nach einem der Ansprüche 1 bis 9, **dadurch gekennzeichnet, dass** in den Enden (9, 10) eine Vertiefung (13) ausgebildet ist, die dafür vorgesehen ist, beim Pulsschweißen verformtes Material des Verstärkungsprofils (8, 8a, 8b) aufzunehmen.

## Claims

1. Chassis component for a motor vehicle,which component comprisesan extruded base profile(2) made of light metal and is reinforced by a steel reinforcing profile (8, 8a, 8b), characterised in thatthe base profile(2) has two walls (3, 4) arranged at a distance (a)from one another and the reinforcing profile(8, 8a, 8b) connects the free ends (9, 10) of the walls (3, 4) in at least one region (6) of the base profile (2), the reinforcing profile(8, 8a, 8b) and the base profile(2) beingjoined by means of electromagnetic pulse welding.

2. Chassis componentaccording to claim 1, characterised in thatarecess(13) is formed in the ends(9, 10) which is provided for receiving material of the ends(9, 10) that is deformed during the pulse welding.

3. Chassis componentaccording to claim2, **characterised in that** the recess(13) has a depth of between 0.5 mm and 2.0 mm.

4. Chassis componentaccording to either claim 2 or claim 3, **characterised in that** the recess(13) comprises two lateral faces (14, 15) which are inclinedrelative to one another, the angle (α) between the lateral faces(14, 15) being between 120° and 160°.

5. Chassis componentaccording to any of claims 1 to 4, **characterised in that** the ends (9, 10)are formed as flange portions(11, 12) projecting laterally from the walls (3, 4).

6. Chassis componentaccording to any of claims 1 to 5, **characterised in that** the reinforcing profile(8a, 8b) has lateral flanged folds (17) whichencompass the ends (9, 10).

7. Chassis componentaccording to any of claims 1 to 6, **characterised in that** an adhesive and/or sealing material(18) is introduced in the joint region of the base profile(2) and the reinforcing profile (8b).

8. Chassis componentaccording to any of claims 1 to 7, **characterised in that** the reinforcing profile(8, 8a, 8b) is arranged in a region (6) of the base profile (2) that is related to stiffness and/or strength.

9. Chassis componentaccording to any of claims 1 to 8, **characterised in that** the reinforcing profile(8, 8a, 8b) has a coating.

10. Chassis componentaccording to any of claims 1 to 9, characterised in thatarecess (13) is formed in the ends(9, 10) which is provided for receiving material of the reinforcing profile (8, 8a, 8b)that is deformed during the pulse welding.

## Revendications

1. Composant de châssis pour un véhicule automobile qui présente un profilé de base (2) extrudé en métal léger et qui est renforcé par un profilé de renforcement (8, 8a, 8b) en acier, **caractérisé en ce que** le profilé de base (2) possède deux parois (3, 4) disposées à distance (a) l'une de l'autre et le profilé de renforcement (8, 8a, 8b) relie les extrémités libres (9, 10) des parois (3, 4) au moins dans une zone (6) du profilé de base (2), le profilé de renforcement (8, 8a, 8b) et le profilé de base (2) étant assemblés par soudage par impulsion électromagnétique.

2. Composant de châssis selon la revendication 1, **caractérisé en ce qu'**une cavité (13) est réalisée dans les extrémités (9, 10), laquelle est prévue afin de recevoir du matériau déformé lors du soudage par impulsion des extrémités (9, 10).

3. Composant de châssis selon la revendication 2, **caractérisé en ce que** la cavité (13) présente une profondeur comprise entre 0,5 et 2 mm.

4. Composant de châssis selon la revendication 2 ou 3, **caractérisé en ce que** la cavité (13) présente deux surfaces latérales (14, 15) inclinées l'une par rapport à l'autre, l'angle (α) entre les surfaces latérales (14, 15) étant compris entre 120° et 160°.

5. Composant de châssis selon l'une quelconque des revendications 1 à 4, **caractérisé en ce que** les extrémités (9, 10) sont réalisées comme des sections bridées (11, 12) dépassant latéralement des parois (3, 4) .

6. Composant de châssis selon l'une quelconque des revendications 1 à 5, **caractérisé en ce que** le profilé de renforcement (8a, 8b) possède des pliures de rebord (17) latérales qui enveloppent les extrémités (9, 10).

7. Composant de châssis selon l'une quelconque des revendications 1 à 6, **caractérisé en ce qu'**un matériau adhésif et/ou étanche (18) est introduit dans la zone d'assemblage du profilé de base (2) et du profilé de renforcement (8b).

8. Composant de châssis selon l'une quelconque des revendications 1 à 7, **caractérisé en ce que** le profilé de renforcement (8, 8a, 8b) est disposé dans une zone (6) importante pour la rigidité et/ou la résistance du profilé de base (2).

9. Composant de châssis selon l'une quelconque des revendications 1 à 8, **caractérisé en ce que** le profilé de renforcement (8, 8a, 8b) présente un revêtement.

10. Composant de châssis selon l'une quelconque des revendications 1 à 9, **caractérisé en ce qu'**une cavité (13) est réalisée dans les extrémités (9, 10), laquelle est prévue pour recevoir du matériau déformé lors du soudage par impulsion du profilé de renforcement (8, 8a, 8b).
